# DEMANDE DE BREVET EUROPEEN

(11) **EP 0 844 775 A1**
(43) Date de publication de la demande: **27.05.1998**
(21) Numéro de dépôt: 97203521.6
(22) Date de dépôt: 12.11.1997
(51) Int. Cl.: H04M 1/72, H04M 11/04

(54) **Téléphone sans fil avec une fonction d'appel d'urgence**

(30) Priorité: 22.11.1996 FR 9614317
(71) Demandeur: Philips Electronics N.V., 5621 BA Eindhoven (NL)
(72) Inventeur: Vogeleisen, Marc, 75008 Paris (FR)
(74) Mandataire: Chaffraix, Jean

(57) **Abrégé**

Ce dispositif de télécommunications est formé d'une base (1) comportant un premier circuit (8) pour se relier à un réseau et un deuxième circuit (12) pour se relier à un appareil personnel (2), l'appareil personnel (2) comportant une touche d'appel d'urgence (56) qui permet de contacter un service de secours.

Application : téléphones sans fil.

## Description

L'invention concerne un dispositif de télécommunications formé d'une base comportant un premier circuit pour se relier à un réseau et un deuxième circuit pour se relier à un appareil personnel.

L'invention concerne aussi un procédé mis en application dans un tel dispositif.

De tels appareils, connus sous le nom de postes téléphoniques sans fils, sont d'un usage courant et procurent un grand confort d'utilisation aux usagers par le nombre de fonctions qu'ils offrent à leurs utilisateurs.

L'invention propose un dispositif du genre mentionné dans le préambule qui apporte une fonction nouvelle bien adaptée à ce genre de dispositif.

Pour cela un tel dispositif est remarquable en ce que ledit appareil personnel comporte une touche d'appel d'urgence.

Ainsi, cette touche d'appel d'urgence signifie simplement que par son appui, l'usager obtient la prise de ligne et la numérotation d'un numéro préalablement enregistré.

Cet avantage est particulièrement important, notamment pour les personnes âgées malades ou des malades cardiaques qui peuvent appeler leur médecin en cas de malaise. L'invention, s'appliquant surtout à des appareils personnels de petite taille, se subsitue aux appareils de télésurveillance utilisés dans les milieux hospitaliers et de prix élevés.

La description suivante, faite en regard des dessins ci-annexés, le tout donné à titre d'exemple non limitatif fera bien comprendre comment l'invention peut être réalisée.
La figure 1 montre un dispositif conforme à l'invention.
La figure 2 montre un organigramme qui explicite le fonctionnement du dispositif montré aux figures précédentes.

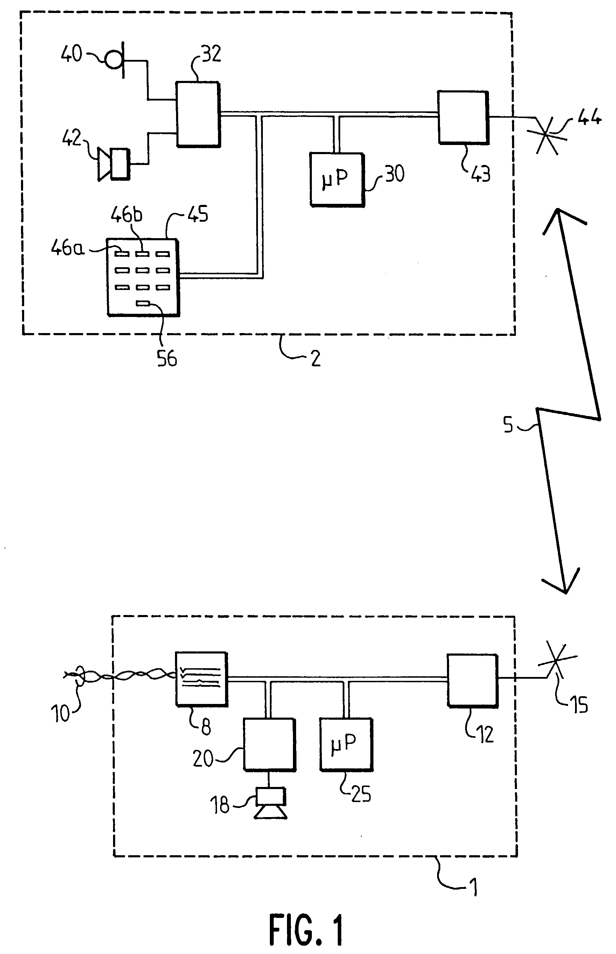

A la figure 1, le dispositif représenté est un téléphone sans fil du genre CTO. Il est formé de deux parties : une base 1 et un appareil personnel 2 qui est, en fait, un combiné téléphonique portable de petite taille de préférence. La base 1 et l'appareil 2 peuvent communiquer par une liaison radioélectrique représentée par une flèche 5.

La base 1 est reliée, par l'intermédiaire d'un circuit de prise de ligne 8, au réseau commuté par une ligne téléphonique 10. Pour pouvoir communiquer avec l'appareil 2, elle comporte un circuit d'émission-réception 12 qui est relié à l'extérieur par une antenne 15. Cette base est équipée en outre d'un haut-parleur 18 utilisé notamment pour l'écoute mains-libres. Ce haut-parleur est branché à la sortie d'un circuit de commande de haut-parleur 20. Tous les éléments précités 8, 20, 12 sont pilotés par un ensemble de gestion 25 à base de processeur déroulant des suites d'instructions comme cela est bien connu de l'homme de l'art pour constituer les moyens mis en oeuvre par l'invention.

L'appareil 2 comporte aussi un ensemble de gestion 30 qui pilote un circuit de parole 32 pour un microphone 40 et un écouteur 42, un circuit d'émission-réception 43 pour la liaison 5 à l'aide d'une antenne 44. Cet ensemble de gestion 30, formé à partir d'un microprocesseur déroule des suites d'instructions pur constituer les moyens de l'invention. En outre, cet appareil 2 est pourvu d'un clavier 45 comportant une pluralité de touches 46a, 46b,...

Conformément à l'invention il est prévu une touche d'appel d'urgence repérée sur la figure 1 par la référence 56.

Le fonctionnement d'un tel dispositif est le suivant.

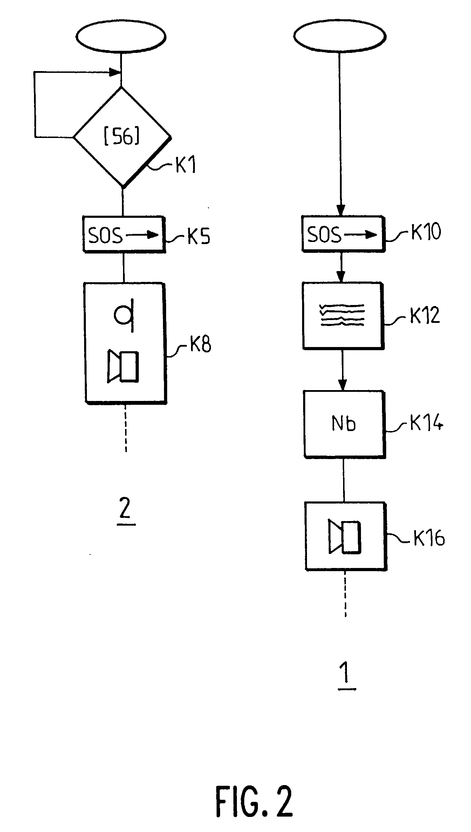

La figure 2 montre un organigramme explicitant ce fonctionnement.

La partie gauche est relative à l'appareil 2. Lorsque l'appareil est à l'état de veille, c'est-à-dire lorsqu'il n'est pas engagé par une communication, l'appui de la touche d'urgence 56 est ausculté sans cesse, ceci est indiqué par la case K1 de cette figure 2. Si cette touche est appuyée, un message indiquant l'urgence est envoyé vers la base 1 (case K5) et le microphone 40 et l'écouteur 42 sont mis à l'état de fonctionner (case K8). Le fonctionnement se passe ensuite de la façon habituelle pour ce genre de dispositif.

La partie droite de cette figure 2 est relative à la base 1. La case K10 indique la réception de message d'urgence. Ceci déclenche alors la prise de la ligne téléphonique 12 (case K12) puis la numérotation du numéro d'urgence préalablement enregistré dans l'ensemble de gestion 25 (case K14). Le haut-parleur 18 est mis aussitôt en fonctionnement (case K16). Le fonctionnement devient alors classique.

Le service de secours est contacté et l'utilisateur peut être ainsi secouru.

## Revendications

1. Dispositif de télécommunications formé d'une base comportant un premier circuit pour se relier à un réseau et un deuxième circuit pour se relier à un appareil personnel, caractérisé en ce que ledit appareil personnel comporte une touche d'appel d'urgence.

2. Dispositif de télécommunications selon la revendication 1, caractérisé en ce que l'appareil personnel comporte un ensemble de gestion dans lequel sont incorporés des moyens pour détecter l'appui de ladite touche et pour envoyer un message d'urgence vers ladite base.

3. Dispositif de télécommunications selon la revendication 2, caractérisé en ce que la base comporte un ensemble de gestion dans lequel sont incorporés des moyens pour recevoir ledit message d'urgence et pour envoyer un numéro d'appel d'urgence.

4. Dispositif de télécommunications selon l'une des revendication 1 à 3, caratérisé en ce que les ensembles de gestion de l'appareil et de la base comportent des moyens pour mettre le dispositif à l'état mains-libres après l'appui de ladite touche.

5. Dispositif de télécommunications selon l'une des revendication 1 à 4, caratérisé en ce que la base et l'appareil personnel sont reliés par voie radioélectrique.

6. Procédé mis en application dans un dispositif selon l'une des revendications 1 à 5.
